# FASCICULE DE BREVET EUROPEEN

(11) **EP 2 462 418 B1**
(45) Date de publication et mention de la délivrance du brevet: **17.01.2018**
(21) Numéro de dépôt: 10762734.1
(22) Date de dépôt: 06.08.2010
(51) Int. Cl.: G01L 9/00, G01L 9/12, G01L 9/04, G01B 7/02

(54) **CAPTEUR DE PRESSION CAPACITIF INTEGRANT UNE MESURE DE TEMPERATURE COMPATIBLE AVEC LES MILIEUX CHAUDS**
MIT HEISSEN UMGEBUNGEN KOMPATIBLER KAPAZITIVER DRUCKSENSOR MIT TEMPERATURMESSUNG
CAPACITIVE PRESSURE SENSOR INCORPORATING A TEMPERATURE MEASUREMENT AND COMPATIBLE WITH HOT ENVIRONMENTS

(30) Priorité: 07.08.2009 FR 0955585
(43) Date de publication de la demande: 13.06.2012
(73) Titulaire: Fogale Nanotech, 30900 Nîmes (FR)
(72) Inventeur: ROZIERE, Didier, F-30900 Nîmes (FR)
(74) Mandataire: Pontet Allano & Associes
(86) Numéro de dépôt international: PCT/FR2010/051672
(87) Numéro de publication internationale: WO 2011/015797

(56) Documents cités:
- EP-A- 0 334 441
- WO-A-92/22794
- FR-A- 2 608 751
- FR-A- 2 756 048
- FR-A- 2 893 711
- US-A- 3 948 102
- US-A- 5 359 491
- US-A1- 2004 075 442

## Description

### Domaine technique

La présente invention concerne un capteur de pression capacitif compatible avec des applications de basse à haute température qui intègre une sonde de température.

Le domaine de l'invention est plus particulièrement mais de manière non limitative celui de l'instrumentation des turbines à gaz, ainsi que des réacteurs d'avions mais aussi dans le domaine nucléaire, automobile et offshore.

### Etat de la technique antérieure

Les fabricants de turbine à gaz utilisent des capteurs de pression pour vérifier le comportement des turbines sur banc d'essai lors du développement mais aussi lors de l'utilisation. Les températures dépassent souvent 600°C et la mesure de pression est réalisée avec des capteurs déportés dans des zones où la température ne dépasse pas quelques centaines de degrés. Cette technique nécessite des interfaces mécaniques lourdes et la mesure dynamique de la pression peut être dégradée du fait de la fonction de transfert de l'interface mécanique.

Les industriels souhaitent de plus en plus effectuer la mesure de pression statique et dynamique in situ c'est-à-dire dans des zones dont la température varie de l'ambiant à environ 800 °C pour les compresseurs, jusqu'à plus de 1000°C pour les turbines haute pression. Les capteurs doivent pouvoir mesurer des pressions de l'ordre de 40 bars dans des conditions de vibrations mécaniques considérables et d'environnement chimique très oxydant. La technologie à mettre en oeuvre est donc d'une importance cruciale et a donné lieu à de nombreux développements.

Parmi les techniques utilisables, on connait les capteurs de pression basés sur des capteurs capacitifs, dont le principe consiste à mesurer le déplacement d'une membrane sous l'effet d'une différence de pression en mesurant le couplage capacitif entre cette membrane et une électrode.

On connait le document EP 2 075 563 de Guo et al., qui divulgue un capteur de pression compatible avec des applications à haute température. Ce capteur est constitué d'une chambre de référence et d'une chambre de pression séparées par une membrane étanche. La déformation de la membrane est mesurée par un capteur capacitif à structure triaxiale comprenant une électrode de mesure centrale, entourée d'une garde qui est maintenue au même potentiel que l'électrode, et d'une masse constituée par le corps du capteur. Cette structure triaxiale à garde active est indispensable pour pouvoir faire des mesures capacitives de bonne qualité dans des environnements bruités.

La membrane, de forme circulaire, est solidaire des parois sur son pourtour et subit un bombement par déformations élastiques sous l'effet de la différence de pression. Le capteur capacitif mesure sensiblement la flèche de ce déplacement au centre de la cavité. Pour calculer la pression, il est nécessaire de connaître le mode de déformation de cette membrane en fonction de la pression, qui dépend en première approximation du matériau, de son épaisseur, et de son module d'Young, ainsi que de son coefficient de dilatation. Le problème est que tous ces paramètres dépendent fortement de la température, dont les amplitudes de variation peuvent être considérables dans les applications visées.

La solution proposée dans EP 2 075 563 est d'équiper le capteur d'une membrane usinée dans un matériau (l'alliage Haynes 230) choisi pour présenter des variations de module d'Young et de coefficient de dilatation en fonction de la température moins importantes que des matériaux plus classiques tels que l'Inconel 750 qui est souvent utilisé pour la réalisation de tels capteurs. Cependant, en l'absence de connaissance de la température, l'incertitude sur la mesure de pression est simplement réduite mais reste significative.

On connaît le document US 3 948 102 de Grant, qui divulgue un capteur de pression à membrane basé également sur un capteur capacitif triaxial. Un thermocouple est ajouté au capteur pour mesurer la température et corriger la mesure de pression. Cependant, le thermocouple est fixé à la masse du capteur, à l'extérieur de la structure triaxiale du capteur capacitif, à une distance relativement éloignée de la membrane et il est relié à l'électronique par deux fils séparés. En d'autres termes, il est juxtaposé plutôt qu'intégré au capteur et n'est donc pas dans des conditions optimales, aussi bien en termes de mesures (la température mesurée peut différer significativement de celle de la membrane) qu'en termes d'intégration mécanique (la connectique est volumineuse).

Pour mesurer la température au plus près de la membrane et optimiser l'intégration mécanique, il faut insérer le thermocouple directement dans le capteur capacitif.

On connaît le document EP 0 334 441 de Bailleul et al., qui divulgue un capteur capacitif coaxial destiné à des mesures en dynamique dans des turbomachines, dans lequel le fil de liaison de l'électrode du capteur est remplacée par un thermocouple soudé sur l'électrode. Toutefois, ce capteur ne peut être utilisé que pour des mesures en dynamique de variations de capacités. En effet, la méthode utilisée engendre des capacités parasites dans le câble, variables et de plusieurs ordres de grandeur plus élevées que la capacité mesurée par le capteur. Ce problème provient pour une part de la configuration coaxiale sans garde du capteur. Il est aussi considérablement aggravé par la présence du fil supplémentaire du thermocouple. En effet, dans la configuration décrite dans EP 0 334 441, les deux fils du thermocouple augmentent la capacité parasite. L'intégration du thermocouple telle que décrite dans EP 0 334 441 entraine donc une dégradation des performances du capteur inacceptables pour des mesures de précisions statiques ou absolues et donc, de fait, la solution proposée dans EP 0 334 441 n'est pas applicable aux mesures de pression.

Le problème est d'autant plus important que dans les applications de mesures sur turbines, le câble doit en général être long de plusieurs mètres pour pouvoir déporter l'électronique des zones chaudes.

On connait le document FR 2 756 048 de Rozière, qui décrit une électronique à pont flottant permettant de faire des mesures capacitives de grande précision avec des capteurs triaxiaux. Dans le but de limiter au maximum les capacités parasites sources de perturbations, cette électronique a la particularité de comprendre une partie flottante référencée au potentiel alternatif de la garde, qui est identique à celui de l'électrode.

On connaît le document FR 2 608 751 de Bruère et al., qui décrit une électronique permettant de faire des mesures capacitives de grande précision avec des capteurs triaxiaux. L'électronique est référencée à la masse générale mais l'électrode de mesure et la garde sont excitées à un même potentiel alternatif au moyen d'un transformateur inséré en série entre les électrodes et l'électronique et excité par un générateur sinusoïdal.

Le but de la présente invention est de proposer un capteur de pression capacitif compatible avec des applications à haute température, qui intègre une sonde de température dans le capteur capacitif.

### Exposé de l'invention

Cet objectif est atteint avec un dispositif de mesure capacitif comprenant des premiers moyens de mesure prévus pour réaliser une première fonction de mesure en relation avec un objet disposé à proximité et/ou une première fonction de détection en relation avec ledit objet, lesquels premiers moyens de mesure comportant :
- un corps en matériau sensiblement conducteur à l'électricité, une électrode capacitive en matériau sensiblement conducteur à l'électricité, et une électrode de garde placée entre le corps et l'électrode capacitive et électriquement isolée du corps d'une part et de l'électrode capacitive d'autre part par des éléments diélectriques,
- des moyens d'excitation qui maintiennent l'électrode capacitive et l'électrode de garde à un potentiel électrique alternatif sensiblement identique,
- des premiers moyens électroniques, reliés aux électrodes capacitives et de garde, pour effectuer une mesure de capacité entre ladite électrode capacitive et ledit objet,
caractérisé en ce qu'il comprend en outre des second moyens de mesure prévus pour réaliser une seconde fonction de mesure, disposés sensiblement à l'intérieur dudit corps et à proximité de l'une quelconque des électrodes capacitive ou de garde, et électriquement reliés auxdits moyens d'excitation de telle sorte à être maintenus à un potentiel électrique alternatif sensiblement identique à celui de l'électrode de garde, et des seconds moyens électroniques couplés auxdits seconds moyens de mesure et référencés audit potentiel électrique alternatif sensiblement identique à celui de l'électrode de garde. Avantageusement, le dispositif selon l'invention peut comprendre en outre un câble de structure triaxiale comportant un conducteur central relié à l'électrode capacitive, un blindage de garde relié à l'électrode de garde, et un blindage de masse relié au corps, et être caractérisé en ce que les seconds moyens de mesure comprennent au moins un conducteur supplémentaire inséré dans le câble triaxial, et reliant le capteur supplémentaire à des seconds moyens électroniques couplés auxdits seconds moyens de mesure.

Le conducteur supplémentaire peut être inséré à l'intérieur du blindage de masse du câble, ou à l'intérieur du blindage de garde.

Le coeur du dispositif selon l'invention est un capteur capacitif permettant de faire des mesures de hautes précisions dans des environnements bruités, grâce à la technique de la garde active. Cette technique consiste à protéger l'électrode de mesure capacitive et le conducteur qui la relie à l'électronique des perturbations extérieures, en l'entourant d'une garde au même potentiel qui évite l'apparition de capacités parasites.

Ces capteurs se prêtent bien à une réalisation compatible avec des températures d'utilisation élevées, de 600°C ou plus. Ils peuvent être réalisés selon une structure cylindrique avec au centre une électrode de mesure capacitive, puis disposées de manière concentrique, une électrode de garde en forme d'anneau et un corps qui permet de fixer le capteur. Les électrodes sont isolées entre elles ou du corps par des éléments diélectriques tel que de la céramique.

Les électrodes et le corps peuvent être réalisés dans des métaux dont le point de fusion est très élevé comme le platine (pour l'électrode) ou plus couramment dans des alliages ou superalliage supportant de très hautes températures. Les métaux sont de préférence choisis avec un coefficient de dilatation proche des céramiques pour limiter les contraintes mécanique. Ces métaux peuvent être du Kovar ou du platine pour des températures très élevées. L'assemblage des éléments en métal et en céramique peut être réalisé par des brasures ou du collage à l'aide de ciments réfractaires.

Ces capteurs sont reliés à une électronique à l'aide d'un long câble de structure triaxiale et à isolant minéral pour la zone chaude. Pour des mesures capacitives performantes, il est indispensable d'utiliser un câble à structure triaxiale et le ou les conducteurs centraux doivent être impérativement sensiblement au même potentiel que celui de la garde dans une section donnée du câble.

Un objet de la présente invention est d'introduire un capteur additionnel dans le capteur capacitif sans perturber notablement ses performances. Ce résultat peut être obtenu parce que le capteur additionnel est électriquement flottant et globalement excité à la même tension alternative que la garde. A la fréquence d'excitation il apparaît donc comme un élément de la garde, ou de l'électrode s'il est en contact avec cette dernière.

Un autre objet de la présente invention est de relier ce capteur à l'électronique déportée au travers du même câble. Cet aspect est particulièrement important pour des mesures à des températures où il est nécessaire d'utiliser des câbles à isolant minéraux, raides et fragiles. L'utilisation du même câble sans introduire de perturbations comme des capacités parasites entre les fils n'est également possible que parce que le capteur additionnel et ses fils sont soumis à la même tension que la garde.

Le fait de regrouper deux capteurs permet dans le cas général un gain d'intégration notamment dans le cas où les accès pour des capteurs sur une machine sont limités, mais il est également déterminant dans certaines applications comme la mesure de pression où il est très important de mesurer la température au plus près du lieu de mesure de la pression, soit à l'électrode capacitive.

Bien entendu les applications de la présente invention ne sont pas limitées au domaine des mesures à haute température ni au domaine des mesures de pressions ou de température.

Il est nécessaire dans un dispositif selon l'invention de créer une véritable garde active, dans laquelle la garde et l'électrode capacitive sont réellement soumises au même potentiel flottant, et d'étendre cette garde à des composants additionnels tels que des capteurs d'une manière qui soit compatible avec les contraintes d'utilisation de ces composants (alimentation, conditionnement de signaux, ...). Pour cela, deux modes de réalisation de l'électronique sont proposés. Bien entendu, la mise en oeuvre d'autres modes de réalisation aboutissant au même résultat resterait dans le champ de l'invention.

Suivant un mode de réalisation, l'électronique peut être conçue de telle sorte que les premiers et des seconds moyens électroniques sont au moins en partie flottants et référencés au potentiel de la garde, les moyens d'excitation étant intégrés à la partie flottante desdits premiers et/ou seconds moyens électroniques.

La description détaillée de ce type d'électronique peut être trouvée en ce qui concerne la partie capacitive dans FR 2 756 048. Dans ce mode de réalisation, l'étage d'entrée au moins de l'électronique (des premier et des seconds moyens) est flottant et référencé au même potentiel que celui de la garde. Cet étage d'entrée peut comprendre un amplificateur de charge pour la mesure capacitive et par exemple un amplificateur de tension pour la lecture du capteur additionnel. L'électrode de garde est directement reliée au potentiel de référence de l'électronique flottante du côté des moyens électroniques. Dans le cas par exemple où le capteur additionnel est un thermocouple soudé sur l'électrode capacitive, un fil du thermocouple est relié à l'amplificateur de charge et le deuxième fil du thermocouple est relié à l'entrée de l'amplificateur de tension.

Un circuit d'amplification et de démodulation synchrone permet de fournir un signal continu proportionnel à la capacité mesurée par le capteur. On peut aussi utiliser une boucle d'asservissement pour obtenir un signal électrique proportionnel avec l'inverse de la capacité afin que ce signal soit proportionnel avec le déplacement d'une membrane par exemple donc avec la pression exercée dans le cas d'une application à la mesure de pression.

L'alimentation de la partie flottante de l'électronique peut être réalisée par exemple au moyen d'un convertisseur de tensions continues DC-DC ou des selfs de choc (ou bobines d'arrêt).

Les liaisons électroniques entre les parties flottantes et non flottantes (référencées à la masse générale) peuvent être réalisées par exemple au moyen d'amplificateurs différentiels ou d'optocoupleurs.

Suivant un autre mode de réalisation, l'électronique peut être conçue de telle sorte que les moyens d'excitation comprennent un transformateur dont le circuit primaire est excité par une source de tension alternative, et le circuit secondaire comprend un enroulement constitué d'un câble blindé, lequel câble comprenant :
- un blindage de garde relié d'un côté du transformateur à l'électrode de garde du capteur, et de l'autre côte à la masse des premiers et seconds moyens électroniques,
- des conducteurs reliés à l'électrode capacitive et au capteur supplémentaire d'un côté du transformateur, et aux premiers et seconds moyens électroniques de l'autre.

La description détaillée de ce type d'électronique peut être trouvée en ce qui concerne la partie capacitive dans FR 2 608 751. Elle repose sur l'utilisation d'un transformateur dont le circuit primaire est excité par une tension alternative. Le circuit secondaire du transformateur est constitué d'un enroulement d'un câble blindé constituant la garde, et des fils de liaison entre l'électrode capacitive et le capteur additionnel d'une part, et les moyens électroniques d'autre part. Le blindage de ce circuit secondaire est relié à la garde du côté des capteurs et à la masse de l'électronique du côté de l'électronique. Dans le cas par exemple où le capteur additionnel est un thermocouple soudé sur l'électrode capacitive, les deux fils du circuit secondaire constituant le thermocouple sont reliés à l'électrode capacitive du côté du capteur et à l'électronique du côté des moyens électroniques. Un des deux fils peut être relié à un amplificateur de charge afin de convertir la capacité crée entre un objet comme une membrane et l'électrode du capteur en signal électrique. Le deuxième fil qui est naturellement au même potentiel alternatif que le premier fil peut être relié à un amplificateur de tension continue afin de fournir le signal électrique continu créé par le thermocouple. L'amplificateur de charge et l'amplificateur de tension sont référencés au même potentiel de masse générale que celui de l'objet à mesurer (la membrane), du blindage extérieur du câble ainsi que du corps du capteur capacitif.

Un circuit d'amplification et de démodulation synchrone permet de fournir un signal continu proportionnel à la capacité mesurée par le capteur. On peut aussi utiliser une boucle d'asservissement pour obtenir un signal électrique proportionnel avec l'inverse de la capacité afin que ce signal soit proportionnel avec le déplacement d'une membrane par exemple donc avec la pression exercée dans le cas d'une application à un capteur de pression.

Suivant un mode de réalisation préférentiel, le dispositif selon l'invention peut être mis en oeuvre dans un capteur de pression, comprenant en outre une membrane en matériau sensiblement conducteur à l'électricité, laquelle membrane :
- est fixée au corps de telle sorte à être sensiblement parallèle à la surface de l'électrode capacitive, et à pouvoir se déformer sous l'effet d'une différence de pressions exercée sur l'une et l'autre de ses faces,
- est couplée de manière capacitive à l'électrode capacitive qui en mesure la déformation.

Le capteur capacitif peut ainsi être utilisé pour la réalisation d'un capteur de pression, en mesurant le déplacement de la membrane sous l'effet de la pression. Cette membrane doit comprendre un matériau sensiblement conducteur à l'électricité, pour pouvoir être couplée de manière capacitive à l'électrode de mesure. Elle peut être métallique, ou constituée d'un matériau diélectrique métallisé du côté de l'électrode. Ce diélectrique peut être par exemple de la céramique pour les applications à hautes températures. En milieu chaud, tous les matériaux utilisables pour réaliser la membrane (alliage métallique réfractaire, céramique...) ont des caractéristiques mécaniques qui évoluent fortement avec les températures élevées et il est indispensable d'effectuer une correction thermique afin d'effectuer une mesure précise de la pression. Le paramètre principal est le module d'élasticité (appelé module de Young) de la membrane qui détermine la sensibilité de la déformation de la membrane avec la pression. Ce paramètre évolue de 15 à 50 % suivant le type de matériau pour des températures variant de l'ambiant à 800°C. Pour obtenir une précision de la mesure de la pression inférieure au pourcent, il est nécessaire de corriger la dérive de la mesure de la déformation de la membrane avec la température.

Avantageusement, l'électronique peut alors être équipée d'un calculateur qui corrige en temps réel la mesure capacitive en fonction de la température mesurée.

Avantageusement, le matériau constituant la membrane peut être choisi, non plus nécessairement pour sa stabilité thermique puisque la température est mesurée, mais de telle sorte que son coefficient de dilatation soit proche de celui de l'ensemble du capteur, afin de limiter les contraintes et les déformations peu contrôlables qu'elles entrainent et qui sont également sources d'erreurs. La limitation des contraintes permet également de limiter les risques de dégradations irréversibles du capteur, notamment les fissures dans le diélectrique et les pertes d'étanchéité.

La membrane peut comprendre un matériau choisi de telle sorte que le coefficient de dilatation de ladite membrane est sensiblement identique au coefficient de dilatation du dispositif, c'est-à-dire au coefficient de dilatation global du capteur capacitif.

Suivant des modes de réalisation :
- le capteur supplémentaire peut comprendre un capteur de température,
- le capteur de température peut comprendre une thermistance,
- le capteur de température peut comprendre un thermocouple.

L'intérêt de la mesure de température n'est pas limité à l'application au capteur de pression. Elle peut être par exemple avantageusement ajoutée à des capteurs capacitifs mesurant des passages d'aubes (jeu d'aubes ou tip timing) et apporter des informations utiles à l'opérateur dans le but d'effectuer des diagnostics plus pertinent sur le comportement du système en test, de réduire le nombre de capteurs de température et de corriger la dérive thermique du capteur.

La technologie couramment utilisée pour effectuer une mesure de température très élevée au-delà de 600°C est le thermocouple. Un thermocouple est constitué de deux fils de différents matériaux soudés entre eux du côté de la zone à mesurer. Cette extrémité constitue la sonde de température. A l'autre extrémité des deux fils, une différence de potentiel apparait et évolue en fonction de la température vue par la sonde de température.

Avantageusement, le thermocouple peut être soudé sur l'électrode capacitive, et le câble triaxial peut comprendre deux conducteurs centraux reliés aux deux fils du thermocouple, l'un desdits conducteurs étant relié simultanément aux premiers et aux seconds moyens électroniques, l'autre conducteur n'étant relié qu'aux seconds moyens électroniques,

Suivant un autre aspect, l'invention consiste à mettre en oeuvre un câble triaxial équipé de deux fils pour réaliser un thermocouple. Ces deux fils sont soudés à l'arrière de l'électrode de mesure capacitive. Les deux fils sont au même potentiel que la garde, l'un des deux fils est relié à l'étage d'entrée de l'électronique de détection capacitive (les premiers moyens) et le deuxième fil est relié à une électronique qui mesure la différence de potentiel des deux fils (les seconds moyens). Si les deux fils du thermocouple sont correctement référencés au potentiel de la garde, ces fils ne rajoutent aucune fuite capacitive vue par l'électronique. Afin de garantir une parfaite mise au potentiel de la garde, les deux fils du thermocouple peuvent être découplés à l'aide d'un condensateur connecté sur ces fils du côté de l'électronique, en parallèle sur l'entrée de l'amplificateur du thermocouple. Bien entendu, ce mode de découplage est applicable à tout type de capteurs, quelque soit le nombre de fils de liaison avec l'électronique.

Suivant d'autres modes de réalisation,
- le câble triaxial peut comprendre trois conducteurs centraux, dont l'un est relié à l'électrode capacitive et les deux autres sont reliés aux deux fils du thermocouple,
- le thermocouple peut être également soudé sur l'électrode de garde.

Suivant un autre aspect, il est proposé un capteur de pression intégrant un dispositif selon l'invention.

Suivant encore un autre aspect, il est proposé un procédé de mesure de pression mettant en oeuvre un dispositif selon l'invention, comprenant :
- une mesure de la déformation d'une membrane sous l'effet de la différence des pressions exercées de part et d'autre de ladite membrane, laquelle déformation est mesurée au moyen d'un capteur capacitif comprenant une électrode capacitive et une électrode de garde excitées sensiblement au même potentiel électrique alternatif,
- une mesure de température effectuée au moyen d'un capteur de température disposé à proximité de l'électrode de mesure capacitive, lequel capteur de température étant excité sensiblement au même potentiel électrique alternatif que l'électrode de garde et l'électrode capacitive,
- un calcul de pression basé sur une fonction de transfert déterminée au préalable, reliant la mesure du capteur capacitif à la différence de pression exercée,
caractérisé en ce que la fonction de transfert est ajustée en fonction de la température mesurée.

Avantageusement,
- la fonction de transfert peut inclure un modèle de déformation élastique de la membrane, et les valeurs d'au moins l'un parmi le coefficient de dilatation et le module d'Young de la membrane peuvent être sélectionnées en fonction de la température mesurée.
- la fonction de transfert peut inclure une pluralité de courbes de calibration établies pour des plages de température déterminées, et la courbe appliquée peut être est sélectionnée en fonction de la température mesurée.
- Le signal généré par l'amplificateur de tension du thermocouple peut être récupéré par un circuit analogique ou numérique pour corriger automatiquement la dérive thermique naturelle du capteur de pression. On peut par exemple utiliser un microprocesseur pour effectuer une correction automatique et en temps réel et fournir une tension analogique qui représente la vraie pression statique et dynamique exercée sur la membrane.

Le dispositif et le procédé selon l'invention permettent de réaliser des mesures aussi bien statiques que dynamiques. Ils peuvent avantageusement trouver des applications dans d'autres domaines que l'instrumentation des turbines. On peut citer, à titre d'exemples non limitatifs, l'instrumentation des moteurs à explosion, les mesures en environnement nucléaire.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 illustre un schéma d'un capteur capacitif équipé d'un thermocouple,
- la figure 2 illustre un schéma d'un capteur de pression équipé d'un thermocouple,
- la figure 3 illustre un premier mode de réalisation de l'électronique d'un capteur de pression équipé d'un thermocouple, basée sur une électronique à pont flottant,
- la figure 4 illustre un second mode de réalisation de l'électronique d'un capteur de pression équipé d'un thermocouple, basée sur une génération de garde par transformateur.

Selon un mode de réalisation préférentiel mais nullement limitatif, le dispositif selon l'invention est sensiblement cylindrique. Le mode de réalisation présenté permet de réaliser des capteurs fonctionnant à des températures supérieures à 600°C.

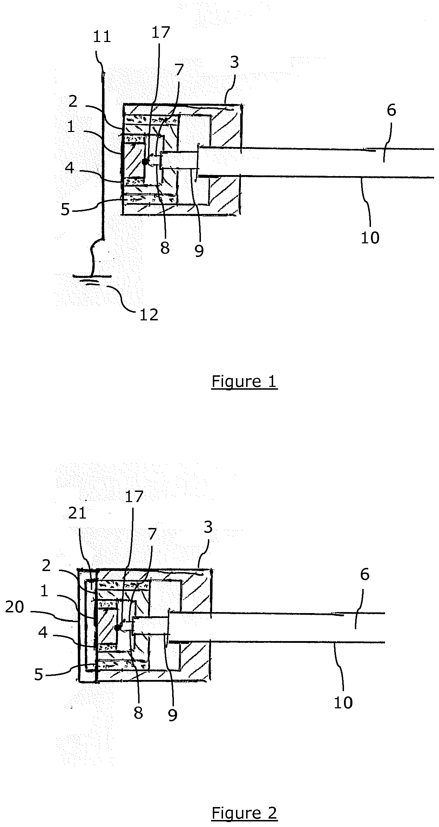

En référence à la figure 1, le capteur capacitif comprend les éléments suivants :
- une électrode de mesure 1, qui peut être constitué de platine, d'un alliage de type Dilver, d'un alliage métallique réfractaire ou de superalliage,
- une électrode de garde 2, qui peut être constitués de platine, d'un alliage de type Dilver, d'un alliage métallique réfractaire ou de superalliage,
- un corps 3, qui peuvent être constitué de platine, d'un alliage de type Dilver, ou d'un alliage métallique réfractaire ou superalliage,
- des bagues diélectriques 4 et 5, qui peuvent être constitué de céramique réfractaire, par exemple à base d'alumine (Al2O3) ou de nitrure de bore (NB),
- un câble triaxial 6, qui comprend deux conducteurs centraux 7 et 8, un blindage de garde 9 relié à l'électrode de garde 2, et un blindage de masse 10 relié au corps 3 du capteur et à la masse de référence 12 du côté de l'électronique.
- un thermocouple 17 soudé à l'électrode de mesure 1, et reliée aux deux fils 7 et 8.

De préférence, le câble 6 est un câble à isolant minéral comprenant des conducteurs en Inconel et un isolant minéral, par exemple à base de poudre d'alumine (Al2O3), de poudre de MgO, d'un autre mélange d'oxyde, ou tout autre isolant minéral.

Les pièces du capteur sont assemblées, de manière non limitative, par brasure ou par collage avec un adhésif de type céramique, à base d'alumine (Al2O3) par exemple.

Dans l'exemple de la figure 1, le capteur mesure la distance entre l'électrode 1 et un objet 11 en matériau conducteur à l'électricité couplé à la masse de référence 12.

En référence à la figure 2, l'objet 11 est remplacé par une membrane 20 qui se déforme sous l'effet d'une différence de pression entre la face avant du capteur et la cavité 21. Cette membrane peut être par exemple en superalliage de type Inconel ou tout autre type d'alliage mais aussi en céramique métallisée.

Cette membrane 20 est reliée à la masse de référence 12 au travers du corps 3 et du blindage de masse 10.

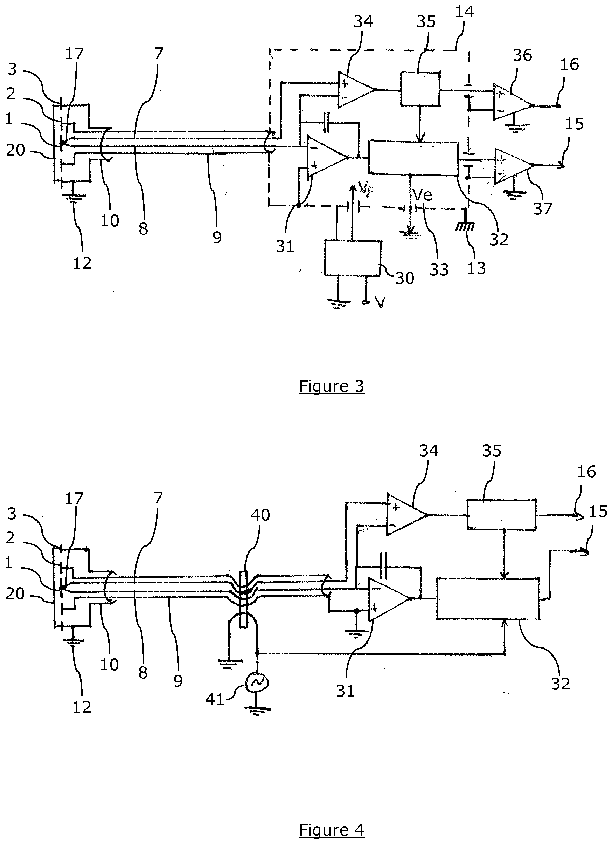

En référence à la figure 3, suivant un premier mode de réalisation, l'ensemble constitué du capteur de pression capacitif et du thermocouple 17 sont contrôlés par une électronique dite à pont flottant, dont la partie 31 32 37 liée à la mesure capacitive est décrite de manière détaillée dans le document FR 2 756 048. Cette électronique comprend une partie 14 flottante, référencée au potentiel 13. L'électrode de garde 2 est excitée à ce potentiel 13 au travers du blindage de garde 9 du câble. Ce potentiel 13 alternatif est généré par rapport à la masse de référence 12 par un oscillateur 33. L'électrode de mesure et le thermocouple 17 sont également excités à ce potentiel 13, de telle sorte qu'aucune différence de potentiel sensible n'apparaisse à la fréquence d'excitation entre les fils 7 et 8 et le blindage de masse 9 d'une part, et les électrodes de mesure 1 et de garde 2 et le thermocouple 17 d'autre part, de telle sorte à éviter l'apparition de capacités parasites.

La partie flottante 14 de l'électronique est alimentée par un convertisseur de tensions continues DC-DC 30, dont la sortie est référencée au potentiel flottant 13. Cette électronique comprend, de manière non limitative :
- pour la détection capacitive, un amplificateur de charge 31 et un capacimètre 32 qui peut être analogique ou numérique,
- pour le thermocouple, un amplificateur différentiel 34 qui peut également être analogique ou numérique.

L'électronique flottante 14 peut être interfacée avec le reste de l'électronique à la masse de référence par des amplificateurs différentiels 36 et 37 pour la transmission de données analogiques, ou par des optocoupleurs.

En référence à la figure 4 suivant un second mode de réalisation, l'électronique ne comprend pas de partie flottante, mais met en oeuvre un transformateur pour générer la garde. La description détaillée de ce type d'électronique peut être trouvée en ce qui concerne la partie capacitive dans le document FR 2 608 751.

La garde est générée par un transformateur 40. Le circuit primaire du transformateur est excité par un oscillateur 41, également utilisé par le capacimètre 32 pour la démodulation du signal capacitif. Le circuit secondaire du transformateur 40 comprend le blindage de garde 9 et les fils 7 et 8 reliée à l'électrode de mesure 1 et au thermocouple 17. Le blindage de garde est relié à la masse de référence du côté de l'électronique. Le transformateur induit par mutuelle inductance une tension sensiblement identique dans tous les conducteurs 7, 8, 9 du secondaire. Les électrodes de mesure 1, de garde 2 et le thermocouple 17 y sont également soumis. Ainsi, aucune différence sensible de potentiel n'apparait à la fréquence d'excitation entre les fils 7 et 8 et le blindage de garde 9 du côté du capteur d'une part, et les électrodes de mesure 1 et de garde 2 et le thermocouple 17 d'autre part, de telle sorte à éviter l'apparition de capacités parasites. Bien entendu, le transformateur est de préférence placé à proximité immédiate de l'électronique.

L'électronique comprend, de manière non limitative :
- pour la détection capacitive, un amplificateur de charge 31 et un capacimètre 32 qui peut être analogique ou numérique,
- pour le thermocouple, un amplificateur différentiel 34 qui peut également être analogique ou numérique.

Suivant des modes de réalisation particuliers, l'électronique peut comprendre également un circuit de correction 35, analogique ou basé sur un microprocesseur ou un FPGA, qui exploite la mesure de température et la transmet au capacimètre 32, de telle sorte que ce dernier (également analogique ou numérique) fournisse directement une mesure de pression corrigée de l'influence de la température.

A titre d'illustration, un capteur de pression capacitif équipé d'une électrode de mesure de 3 mm de diamètre et d'une membrane placée à environ 100 µm de distance de l'électrode mesure une capacité nominale d'environ 0.62 pF. Sous une différence de pressions de 40 bars, une membrane métallique fléchit d'environ 10 µm. La variation correspondante de la capacité est de 0.062 pF (pour 40 bars). Pour obtenir une précision de mesure inférieure à 1 % de l'étendue de mesure, il faut mesurer la capacité avec une erreur inférieure à 0.00062 pF. Si on utilise un câble coaxial sans garde à isolant minéral d'une longueur de plusieurs mètres tel que dans le document EP 0 334 441, la capacité due uniquement au câble vue par le capacimètre est de plus de 1000 pF. Cette fuite capacitive empêche toute mesure de la pression. Avec un câble triaxial même équipé de deux fils pour le thermocouple et connecté à l'une des électroniques décrites dans le présent document (flottante ou à transformateur), la fuite capacitive due au câble est inférieure à 0.0001 pF, ce qui correspond à une erreur de mesure (en absolu) inférieure à 0.065 bars, soit 0.16% de l'étendue de mesure.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif de mesure capacitif comprenant des premiers moyens de mesure prévus pour réaliser une première fonction de mesure en relation avec un objet (11) disposé à proximité et/ou une première fonction de détection en relation avec ledit objet (11), lesquels premiers moyens de mesure comportant :
- un corps (3) en matériau sensiblement conducteur à l'électricité, une électrode capacitive (1) en matériau sensiblement conducteur à l'électricité, et une électrode de garde (2) placée entre le corps (3) et l'électrode capacitive (1) et électriquement isolée du corps d'une part et de l'électrode capacitive d'autre part par des éléments diélectriques (4, 5),
- des moyens d'excitation (33, 40, 41) électriquement reliés à l'électrode capacitive (1) et l'électrode de garde (2) de telle sorte à maintenir lesdites électrodes capacitive (1) et de garde (2) à un potentiel électrique alternatif sensiblement identique,
- des premiers moyens électroniques (31, 32), reliés aux électrodes capacitives (1) et de garde (2), pour effectuer une mesure de capacité entre ladite électrode capacitive (1) et ledit objet (11),
**caractérisé en ce qu'**il comprend en outre :
- des second moyens de mesure prévus pour réaliser une seconde fonction de mesure, disposés sensiblement à l'intérieur dudit corps (3) et à proximité de l'une quelconque des électrodes capacitive (1) ou de garde (2), et électriquement reliés auxdits moyens d'excitation (33, 40, 41) de telle sorte à être maintenus à un potentiel électrique alternatif sensiblement identique à celui de l'électrode de garde (2), et
- des seconds moyens électroniques (35) couplés auxdits seconds moyens de mesure et référencés audit potentiel électrique alternatif sensiblement identique à celui de l'électrode de garde (2).

2. Dispositif selon la revendication 1, comprenant en outre un câble de structure triaxiale (6) comportant un conducteur central (7) relié à l'électrode capacitive (1), un blindage de garde (9) relié à l'électrode de garde (2), et un blindage de masse (10) relié au corps (3),
**caractérisé en ce que** les seconds moyens de mesure comprennent au moins un conducteur supplémentaire (8) inséré dans le câble triaxial (6), et reliant le capteur supplémentaire (17) à des seconds moyens électroniques (35, 35) couplés auxdits seconds moyens de mesure.

3. Dispositif selon l'une des revendications 1 ou 2, **caractérisé en ce que** les premiers et des seconds moyens électroniques sont au moins en partie flottants et référencés au potentiel de la garde (13), les moyens d'excitation (33) étant intégrés à la partie flottante desdits premiers et/ou seconds moyens électroniques.

4. Dispositif selon l'une des revendications 1 ou 2, **caractérisé en ce que** les moyens d'excitation comprennent un transformateur (40) dont le circuit primaire est excité par une source de tension alternative (41), et le circuit secondaire comprend un enroulement constitué d'un câble blindé, lequel câble comprenant :
- un blindage de garde (9) relié d'un côté du transformateur à l'électrode de garde (2) du capteur, et de l'autre côte à la masse (12) des premiers et seconds moyens électroniques,
- des conducteurs (7, 8) reliés à l'électrode capacitive (1) et au capteur supplémentaire (17) d'un côté du transformateur, et aux premiers et seconds moyens électroniques de l'autre.

5. Dispositif selon l'une quelconque des revendications précédentes, **caractérisé en ce qu'**il comprend en outre une membrane (20) en matériau sensiblement conducteur à l'électricité, laquelle membrane :
- est fixée au corps (3) de telle sorte à être sensiblement parallèle à la surface de l'électrode capacitive (1), et à pouvoir se déformer sous l'effet d'une différence de pressions exercées sur l'une et l'autre de ses faces,
- est couplée de manière capacitive à l'électrode capacitive (1) qui en mesure la déformation.

6. Dispositif selon la revendication 5, **caractérisé en ce que** la membrane (20) comprend un matériau choisi de telle sorte que le coefficient de dilatation de ladite membrane est sensiblement identique au coefficient de dilatation du dispositif.

7. Dispositif selon l'une quelconque des revendications précédentes, **caractérisé en ce que** le capteur supplémentaire (17) comprend un capteur de température.

8. Dispositif selon la revendication 7, **caractérisé en ce que** le capteur de température (17) comprend un thermocouple.

9. Dispositif selon la revendication 8, **caractérisé en ce que** :
- le thermocouple (17) est soudé sur l'électrode capacitive (1), et
- le câble triaxial (6) comprend deux conducteurs centraux (7, 8) reliés aux deux fils du thermocouple (17), l'un desdits conducteurs (8) étant relié simultanément aux premiers (31) et aux seconds (34) moyens électroniques, l'autre conducteur (7) n'étant relié qu'aux seconds moyens électroniques (34).

10. Dispositif selon la revendication 8, **caractérisé en ce que** le câble triaxial (6) comprend trois conducteurs centraux, dont l'un est relié à l'électrode capacitive (1) et les deux autres sont reliés aux deux fils du thermocouple (17).

11. Dispositif selon la revendication 10, **caractérisé en ce que** le thermocouple (17) est soudé sur l'électrode de garde (2).

12. Capteur de pression intégrant un dispositif selon l'une quelconque des revendications 5 à 11.

13. Procédé de mesure de pression mettant en oeuvre un dispositif selon l'une quelconque des revendications précédentes, comprenant :
- une mesure de la déformation d'une membrane (20) sous l'effet de la différence des pressions exercées de part et d'autre de ladite membrane, laquelle déformation est mesurée au moyen d'un capteur capacitif comprenant une électrode capacitive (1) et une électrode de garde (2) excitées sensiblement au même potentiel électrique alternatif,
- une mesure de température effectuée au moyen d'un capteur de température (17) disposé à proximité de l'électrode de mesure capacitive (1), lequel capteur de température étant excitée sensiblement au même potentiel électrique alternatif que l'électrode de garde (2) et l'électrode capacitive (1),
- un calcul de pression basé sur une fonction de transfert déterminée au préalable, reliant la mesure du capteur capacitif à la différence de pression exercée,
**caractérisé en ce que** la fonction de transfert est ajustée en fonction de la température mesurée.

14. Procédé selon la revendication 13, **caractérisé en ce que** la fonction de transfert inclut un modèle de déformation élastique de la membrane (20), et que les valeurs d'au moins l'un parmi le coefficient de dilatation et le module d'Young de la membrane sont sélectionnées en fonction de la température mesurée.

15. Procédé selon la revendication 13, **caractérisé en ce que** la fonction de transfert inclut une pluralité de courbes de calibration établies pour des plages de température déterminées, et que la courbe appliquée est sélectionnée en fonction de la température mesurée.

## Patentansprüche

1. Kapazitive Messvorrichtung, umfassend erste Messmittel, die dazu vorgesehen sind, eine erste Messfunktion in Verbindung mit einem in der Nähe angeordneten Objekt (11) und/oder eine erste Erfassungsfunktion in Verbindung mit dem Objekt (11) zu übernehmen, wobei die ersten Messmittel umfassen:
- ein Gehäuse (3) aus im Wesentlichen elektrisch leitendem Material, eine kapazitive Elektrode (1) aus im Wesentlichen elektrisch leitendem Material und eine Schutzelektrode (2), die zwischen dem Gehäuse (3) und der kapazitiven Elektrode (1) angeordnet und von dem Gehäuse einerseits und von der kapazitiven Elektrode andererseits durch dielektrische Elemente (4, 5) elektrisch isoliert ist,
- Erregungsmittel (33, 40, 41), die mit der kapazitiven Elektrode (1) und der Schutzelektrode (2) derart elektrisch verbunden sind, dass die kapazitive Elektrode (1) und die Schutzelektrode (2) auf einem im Wesentlichen identischen elektrischen Wechselpotential gehalten werden,
- erste elektronische Mittel (31, 32), die mit der kapazitiven Elektrode (1) und der Schutzelektrode (2) verbunden sind, um eine Kapazitätsmessung zwischen der kapazitiven Elektrode (1) und dem Objekt (11) durchzuführen,
**dadurch gekennzeichnet, dass** sie ferner umfasst:
- zweite Messmittel, die dazu vorgesehen sind, eine zweite Messfunktion zu übernehmen, die im Wesentlichen innerhalb des Gehäuses (3) und in der Nähe von einer der kapazitiven Elektrode (1) oder der Schutzelektrode (2) angeordnet sind und mit den Erregungsmitteln (33, 40, 41) derart elektrisch verbunden sind, dass sie auf einem elektrischen Wechselpotential, das mit dem der Schutzelektrode (2) im Wesentlichen identisch ist, gehalten werden, und
- zweite elektronische Mittel (35), die mit den zweiten Messmitteln gekoppelt sind und auf das elektrische Wechselpotential, welches mit dem der Schutzelektrode (2) im Wesentlichen identisch ist, bezogen sind.

2. Vorrichtung nach Anspruch 1, ferner umfassend ein Triaxialstruktur-Kabel (6), das einen mittleren Leiter (7), welcher mit der kapazitiven Elektrode (1) verbunden ist, eine Schutzabschirmung (9), die mit der Schutzelektrode (2) verbunden ist, und eine Masseabschirmung (10) die mit dem Gehäuse (3) verbunden ist, aufweist,
**dadurch gekennzeichnet, dass** die zweiten Messmittel wenigstens einen zusätzlichen Leiter (8) umfassen, der in das Triaxial-Kabel (6) eingesetzt ist und den zusätzlichen Sensor (17) mit zweiten elektronischen Mitteln (35, 35), welche mit den zweiten Messmitteln gekoppelt sind, verbindet.

3. Vorrichtung nach einem der Ansprüche 1 oder 2, **dadurch gekennzeichnet, dass** die ersten und die zweiten elektronischen Mittel wenigstens teilweise schwebend und auf das Potential des Schutzes (13) bezogen sind, wobei die Erregungsmittel (33) in den schwebenden Teil der ersten und/oder zweiten elektronischen Mittel integriert sind.

4. Vorrichtung nach einem der Ansprüche 1 oder 2, **dadurch gekennzeichnet, dass** die Erregungsmittel einen Transformator (40) umfassen, dessen Primärkreis durch eine Wechselspannungsquelle (41) erregt wird und dessen Sekundärkreis eine von einem abgeschirmten Kabel gebildete Wicklung umfasst, wobei das Kabel umfasst:
- eine Schutzabschirmung (9), die auf einer Seite des Transformators mit der Schutzelektrode (2) des Sensors und auf der anderen Seite mit der Masse (12) der ersten und zweiten elektronischen Mittel verbunden ist,
- Leiter (7, 8), die mit der kapazitiven Elektrode (1) und mit dem zusätzlichen Sensor (17) auf einer Seite des Transformators und mit den ersten und zweiten elektronischen Mitteln auf der anderen verbunden sind.

5. Vorrichtung nach einem der vorhergehenden Ansprüche, **dadurch gekennzeichnet, dass** sie ferner eine Membran (20) aus im Wesentlichen elektrisch leitendem Material umfasst, welche Membran:
- an dem Gehäuse (3) derart befestigt ist, dass sie zu der Oberfläche der kapazitiven Elektrode (1) im Wesentlichen parallel verläuft und sich unter der Wirkung einer Differenz von Drücken, welche auf die eine und die andere ihrer Seiten ausgeübt werden, verformen kann,
- mit der kapazitiven Elektrode (1), die deren Verformung misst, kapazitiv gekoppelt ist.

6. Vorrichtung nach Anspruch 5, **dadurch gekennzeichnet, dass** die Membran (20) ein Material umfasst, das derart gewählt ist, dass der Ausdehnungskoeffizient der Membran mit dem Ausdehnungskoeffizienten der Vorrichtung im Wesentlichen identisch ist.

7. Vorrichtung nach einem der vorhergehenden Ansprüche, **dadurch gekennzeichnet, dass** der zusätzliche Sensor (17) einen Temperaturfühler umfasst.

8. Vorrichtung nach Anspruch 7, **dadurch gekennzeichnet, dass** der Temperaturfühler (17) ein Thermoelement umfasst.

9. Vorrichtung nach Anspruch 8, **dadurch gekennzeichnet, dass**:
- das Thermoelement (17) auf die kapazitive Elektrode (1) gelötet ist, und
- das Triaxial-Kabel (6) zwei mittlere Leiter (7, 8) umfasst, welche mit den beiden Drähten des Thermoelements (17) verbunden sind, wobei einer der Leiter (8) gleichzeitig mit den ersten (31) und mit den zweiten (34) elektronischen Mitteln verbunden ist, wobei der andere Leiter (7) nur mit den zweiten elektronischen Mitteln (34) verbunden ist.

10. Vorrichtung nach Anspruch 8, **dadurch gekennzeichnet, dass** das Triaxial-Kabel (6) drei mittlere Leiter umfasst, von denen der eine mit der kapazitiven Elektrode (1) verbunden ist und die beiden anderen mit den beiden Drähten des Thermoelements (17) verbunden sind.

11. Vorrichtung nach Anspruch 10, **dadurch gekennzeichnet, dass** das Thermoelement (17) auf die Schutzelektrode (2) gelötet ist.

12. Drucksensor, in den eine Vorrichtung nach einem der Ansprüche 5 bis 11 integriert ist.

13. Verfahren zur Druckmessung, das eine Vorrichtung nach einem der vorhergehenden Ansprüche verwendet, umfassend:
- eine Messung der Verformung einer Membran (20) unter der Wirkung der Differenz der Drücke, die auf beiden Seiten der Membran ausgeübt werden, welche Verformung mittels eines kapazitiven Sensors gemessen wird, der eine kapazitive Elektrode (1) und eine Schutzelektrode (2) umfasst, die im Wesentlichen mit dem gleichen elektrischen Wechselpotential erregt werden,
- eine Temperaturmessung, die mittels eines Temperaturfühlers (17), welcher in der Nähe der kapazitiven Messelektrode (1) angeordnet ist, durchgeführt wird, wobei der Temperaturfühler im Wesentlichen mit dem gleichen elektrischen Wechselpotential wie die Schutzelektrode (2) und die kapazitive Elektrode (1) erregt wird,
- eine Druckberechnung, basierend auf einer zuvor bestimmten Transferfunktion, welche den Messwert des kapazitiven Sensors mit der Differenz des ausgeübten Druckes verbindet,
**dadurch gekennzeichnet, dass** die Transferfunktion in Abhängigkeit von der gemessenen Temperatur angepasst wird.

14. Verfahren nach Anspruch 13, **dadurch gekennzeichnet, dass** die Transferfunktion ein Modell elastischer Verformung der Membran (20) einschließt und dass die Werte von wenigstens einem aus dem Ausdehnungskoeffizienten und dem Elastizitätsmodul der Membran in Abhängigkeit von der gemessenen Temperatur ausgewählt werden.

15. Verfahren nach Anspruch 13, **dadurch gekennzeichnet, dass** die Transferfunktion eine Vielzahl von für bestimmte Temperaturbereiche erstellten Kalibrierkurven einschließt und dass die angewandte Kurve in Abhängigkeit von der gemessenen Temperatur ausgewählt wird.

## Claims

1. A capacitive measurement device comprising first measurement means designed to carry out a first measurement function in relation to an object (11) placed nearby and/or a first detection function in relation to said object (11), said first measurement means comprising:
- a body (3) of a substantially electrically conductive material, a capacity electrode (1) of a substantially electrically conductive material, and a guard electrode (2) placed between the body (3) and the capacitive electrode (1) and electrically insulated from the body on the one hand and from the capacitive electrode on the other hand by dielectric elements (4, 5),
- excitation means (33, 40, 41) which maintain the capacitive electrode (1) and the guard electrode (2) to a substantially identical AC electrical potential,
- first electronic means (31, 32), connected to the capacitive (1) and guard (2) electrodes, for measuring the capacitance between said capacitive electrode (1) and said object (11),
**characterised in that** it further comprises:
- second measurement means designed to carry out a second measurement function, which are placed substantially within said body (3) and in the vicinity of either the capacitive (1) or guard (2) electrode, and electrically connected to said excitation means (33, 40, 41) such as to be maintained to an AC electrical potential substantially identical to that of the guard electrode (2), and
- second electronic means (35) coupled to said second measurement means and referenced to said AC electrical potential substantially identical to that of the guard electrode (2).

2. The device according to claim 1, further comprising a triaxial structure cable (6) including a centre conductor (7) connected to the capacitive electrode (1), a guard shielding (9) connected to the guard electrode (2) and a ground shielding (10) connected to the body (3) ,
**characterised in that** the second measurement means comprise at least one further conductor (8) inserted in the triaxial cable (6), and connecting the further sensor (17) to second electronic means (35, 35) coupled to said second measurement means.

3. The device according to one of claims 1 or 2, **characterised in that** the first and second electronic means are at least in part floating and referenced to the potential of the guard (13), the excitation means
(33) being integrated in the floating part of said first and/or second electronic means.

4. The device according to one of claims 1 or 2, **characterised in that** the excitation means comprise a transformer (40) the primary circuit of which is excited by a AC voltage source (41), and the secondary circuit of which comprises a winding consisting of a shielded cable, said cable comprising:
- a guard shielding (9) connected on one side of the transformer to the guard electrode (2) of the sensor, and on the other side, to the ground (12) of the first and second electronic means,
- conductors (7, 8) connected to the capacitive electrode (1) and the further sensor (17) on one side of the transformer, and to the first and second electronic means on the other side.

5. The device according to any of the preceding claims, **characterised in that** it further comprises a membrane (20) of a substantially electrically conductive material, which membrane:
- is fastened to the body (3) so as to be substantially parallel to the surface of the capacitive electrode (1), and to be deformable under the effect of a pressure difference applied on either face thereof,
- is capacitively coupled to the capacitive electrode (1) which measures the deformation thereof.

6. The device according to claim 5, **characterised in that** the membrane (20) comprises a material selected so that the expansion coefficient of said membrane is substantially identical to the expansion coefficient of the device.

7. The device according to any of the preceding claims, **characterised in that** the further sensor (17) comprises a temperature sensor.

8. The device according to claim 7, **characterised in that** the temperature sensor (17) comprises a thermocouple.

9. The device according to claim 8, **characterised in that**:
- the thermocouple (17) is welded to the capacitive electrode (1), and
- the triaxial cable (6) comprises two centre conductors (7, 8) connected to both wires of the thermocouple (17), one of said conductors (8) being simultaneously connected to the first (31) and second (34) electronic means, the other conductor (7) being only connected to the second electronic means (34).

10. The device according to claim 8, **characterised in that** the triaxial cable (6) comprises three centre conductors, one of which being connected to the capacitive electrode (1) and the two other ones being connected to both wires of the thermocouple (17).

11. The device according to claim 10, **characterised in that** the thermocouple (17) is welded to the guard electrode (2).

12. A pressure sensor integrating a device according to any of claims 5 to 11.

13. A pressure measurement method implementing a device according to any of the preceding claims, comprising:
- measuring the deformation of a membrane (20) under the effect of a pressure difference applied on either side of said membrane, which deformation is measured by means of a capacitive sensor comprising a capacitive electrode (1) and a guard electrode (2) substantially excited at the same AC electric potential,
- measuring a temperature by means of a temperature sensor (17) provided in the vicinity of the capacitive measurement electrode (1), which temperature sensor is substantially excited at the same AC electric potential as the guard electrode (2) and the capacitive electrode (1),
- calculating a pressure based on a transfer function determined beforehand, relating the measure of the capacitive sensor to the pressure difference applied,
**characterised in that** the transfer function is adjusted depending on the measured temperature.

14. The method according to claim 13, **characterised in that** the transfer function includes an elastic deformation pattern of the membrane (20), and
**in that** the values of at least one of the expansion coefficient and Young modulus of the membrane are selected depending on the measured temperature.

15. The method according to claim 13, **characterised in that** the transfer function includes a plurality of calibration curves set for determined temperature ranges, and **in that** the curve applied is selected depending on the measured temperature.
